# EUROPEAN PATENT APPLICATION

(11) **EP 3 988 343 A1**
(43) Date of publication of application: **27.04.2022**
(21) Application number: 20826276.6
(22) Date of filing: 10.06.2020
(51) Int. Cl.: B60C 15/04, B60C 15/06

(54) **TIRE**

(30) Priority: 19.06.2019 JP 2019113619
(71) Applicant: BRIDGESTONE CORPORATION, Chuo-ku Tokyo 104-8340 (JP)
(72) Inventor: SUZUKI, Takahiro, Chuo ku Tokyo 104-8340 (JP); HASEGAWA, Keiichi, Chuo-ku Tokyo 104-8340 (JP)
(74) Representative: Oxley, Robin John George
(86) International application number: PCT/JP2020/022898
(87) International publication number: WO 2020/255834

(57) **Abstract**

In a tire (10) or a tire manufacturing method, a bead section (60) includes a bead member (65) formed by integrally molding a bead core (61), in which a resin material (61b) covers bead cords (61a), and a bead filler (63) made with a resin material covering the bead core (61), and around which a carcass ply (40), in the tire (10), is folded. In a cross-section along a tire widthwise direction (WD) and a tire radial direction (RD) of the bead member (65), the bead core (61) is arranged by being shifted with respect to a width-directional center (BCL) of the bead member (65).

## Description

### Technical Field

The present invention relates to a tire in which a part of a bead section is formed of a resin material.

### Related Art

Conventionally, a tire in which a resin is filled in a void portion of a bead core (refer to Patent Documents 1). In this tire, since an amount of a bead cord made of metal can be reduced, a weight of the tire can be reduced.

### Citation List

### Patent Literature

Patent Literature 1: JP 2002-187414 A

### Summary of Invention

### Technical Problem

As described above, although it is possible to reduce a weight of a tire by replacing a part of a constituent member of the tire with a resin from a metal or a rubber, there are following problems.

For example, a bead member formed by integrally molding a bead core having a bead cord coated with a resin and a bead filler made of a resin may be used for a bead section of a tire.

Such a bead member is formed by arranging a bead core, the bead core formed in an annular shape, inside the bead member. The bead member can be molded by, for example, holding the bead core with a jig or the like in a mold to be molded and injecting the molten resin material into the mold.

In order to reduce displacement of the bead core in the mold caused by an injected resin material, the bead core and the jig may be held in a state to be in contact with each other. However, in this molding method, in the bead member after molding, a recess in which the bead core is exposed is formed at a portion where the jig held the bead core. Therefore, in the bead member formed by this method, in the step of applying an adhesive for bonding the bead member and a carcass ply, there is a risk that a large amount of the adhesive flows into the recess and the drying time may become longer. In other words, there is room for improvement in productivity.

Further, since a resin used for the bead core is often selected from a resin harder than a material forming the bead filler, there is a possibility that a trouble occurs due to a difference of rigidity between the bead core and the rubber around the bead filler. In order to avoid such trouble, the exposed part of the bead core after coating with the bead filler resin is preferably as small as possible.

An object of the present invention is to provide a tire utilizing a bead member in which a bead core having a bead cord coated with a resin and a resin-made bead filler are integrally molded while exposures of a bead core and a recess formed therein are reduced.

### Solution to Problem

A tire according to an embodiment of present invention includes a tread section configured to be in contact with a road surface, a tire side section being continuous with the tread section and positioned on an inner side in a tire radial direction with respect to the tread section, and a bead section being continuous with the tire side section and positioned on an inner side in the tire radial direction with respect to the tire side section. The tire further includes a carcass ply as a skeleton of the tire, which is folded outward in a tire widthwise direction via the bead section. The bead section includes a bead member formed by integrally molding a bead core, in which a resin material covers bead cords, and a bead filler made with a resin material covering the bead core. In a cross-section along the tire widthwise direction and the tire radial direction, a center position of the bead core is arranged by being shifted with respect to a width-directional center of the bead member.

A tire manufacturing method according to an embodiment of the present invention includes, a step of forming a coated cord formed by coating a bead cord with a resin material, a step of forming a bead core in which a gap between the bead cords is filled with a resin material by forming the bead core in an annular shape while fusing or bonding the resin materials of the coated cords to each other, a step of holding the bead core in a mold by abutting the bead core with a jig provided in a cavity of the mold, the mold configured to mold a bead member to be included in a bead section of the tire, and a step of molding the bead member by injecting molten resin material into the cavity. In the step of holding the bead core, the bead core is held in the mold so that a center position of the bead core is arranged on a side at which the jig is arrange by being shifted with respect to a width-directional center of the cavity, in a cross-section along a tire widthwise direction and a tire radial direction.

### Advantageous Effects of Invention

According to the above configuration, a tire utilizing a bead member in which a bead core having a bead cord coated with a resin and a bead filler made with a resin material are integrally molded while in which the exposures of a bead core or a recessed parts formed therein are reduced is provided, by employing a resin-made bead member with shallow recesses formed on a surface thereof in a manufacturing process, in a bead section of the tire.

### Brief Description of Drawings

FIG. 1 is a cross-sectional view of a pneumatic tire 10.
FIG. 2 is a partially enlarged cross-sectional view of the pneumatic tire 10.
FIG. 3(a) is a partial perspective cross-sectional view of a bead member 65 included in a bead section 60, FIG. 3(b) is a cross-sectional view taken along IIIb-IIIb in FIG. 3(a), and FIG. 3(c) is a cross-sectional view taken along IIIc-IIIc in FIG. 3(a).
FIG. 4 is a cross-sectional view of a bead-member mold 80 including a position where a jig 85 configured to hold a bead core 61 is provided, in which a state where the bead core 61 is held in the bead-member mold 80 is illustrated.
FIG. 5(a) is an enlarged cross-sectional view illustrating a state before the bead core 61 is held by the jig 85 in the bead-member mold 80, FIG. 5(b) is an enlarged cross-sectional view illustrating a state the bead core 61 is held by the jig 85 in the bead-member mold 80, and FIG. 5(c) is an enlarged cross-sectional view illustrating a state the bead core 61 is held by the jig 85 in the bead-member mold 80 at a circumferential position where the jig 85 is not arranged.
FIG. 6 is an enlarged cross-sectional view of a bead member 165 according to a variation.

### Description of Embodiments

Embodiments will be described with reference to the drawings. Note that the same functions and structures are denoted by the same or similar reference numerals, and the description thereof is omitted as appropriate.

### (1)Overall schematic configuration of the tire

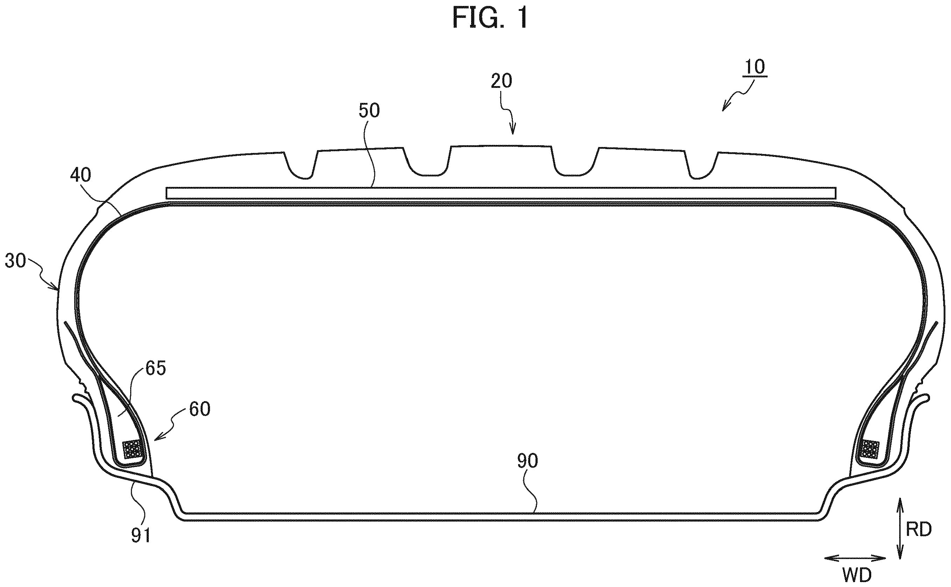

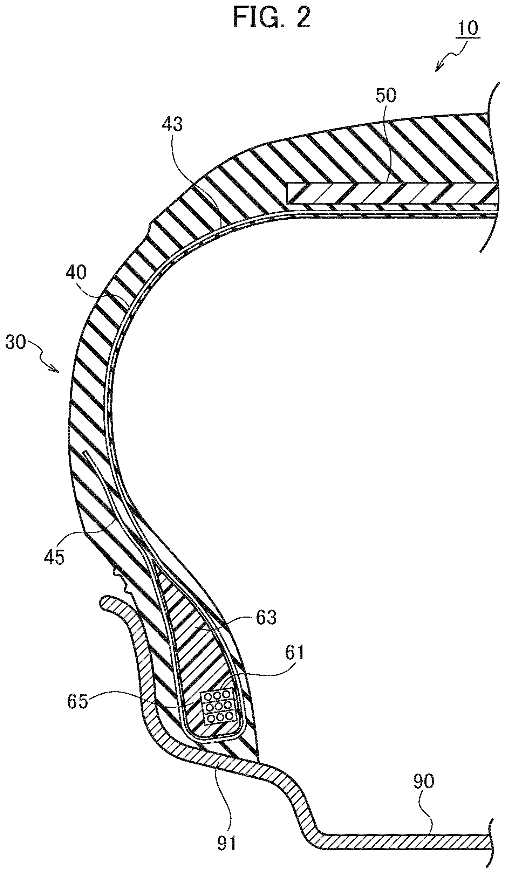

FIG. 1 is a cross-sectional view of a pneumatic tire 10 according to the present embodiment. Specifically, FIG. 1 is a cross-sectional view of the pneumatic tire 10 along a tire widthwise direction WD and a tire radial direction RD. In FIG. 1, the cross-section hatching is omitted (hereinafter the same). FIG. 2 is a partially enlarged cross-sectional view of the pneumatic tire 10.

As illustrated in FIG. 1, the pneumatic tire 10 includes a tread section 20, a tire side section 30, a carcass ply 40, a belt layer 50, and a bead section 60.

The tread section 20 is a section configured to be in contact with a road surface (not illustrated). A pattern (not illustrated) in accordance with the use environment of the pneumatic tire 10 and a type of vehicle to be mounted is formed on the tread section 20.

The tire side section 30 is continuous with the tread section 20 and positioned on an inner side in the tire radial direction RD with respect to the tread section 20. The tire side section 30 is a section from an outside end in the tire widthwise direction of the tread section 20 to an upper end of the bead section 60. The tire side section 30 is sometimes called a sidewall or the like.

A body part 43 of the carcass ply 40 reaches the bead section 60 from the tread section 20 through the tire side section 30 to form a skeleton of the pneumatic tire 10. The carcass ply 40 has a radial structure in which carcass cords radially arranged along the tire radial direction RD are coated with a rubber material. However, a tire in one or more embodiments is not limited to the radial structure, and may be a bias structure in which the carcass cords are arranged so as to intersect in the tire radial direction RD.

Further, the carcass cord is not particularly limited, and can be formed by an organic fiber cord similar to a tire for a general passenger automobile (including minivans and sport utility vehicles).

The belt layer 50 is provided on an inner side in the tire radial direction RD of the tread section 20. The belt layer 50 is a single-layer spiral belt in which a reinforcing cord is coated with a resin. However, the belt layer 50 is not limited to a single-layer spiral belt. For example, the belt layer 50 may be a two-layer crossing belt coated with rubber.

A resin material having a higher tensile elastic modulus than a rubber material constituting the tire side section 30 and a rubber material constituting the tread section 20 is used as the resin for coating the reinforcing cord. As the resin for coating the reinforcing cord, a thermoplastic resin having elasticity, a thermoplastic elastomer (TPE), a thermosetting resin or the like may be used. It is preferable to utilize a thermoplastic elastomer in consideration of elasticity in traveling and moldability in manufacturing.

Examples of the thermoplastic elastomer include polyolefin-based thermoplastic elastomer (TPO), polystyrene-based thermoplastic elastomer (TPS), polyamide-based thermoplastic elastomer (TPA), polyurethane-based thermoplastic elastomer (TPU), polyester-based thermoplastic elastomer (TPC), and dynamically cross-linked thermoplastic elastomer (TPV).

Examples of the thermoplastic resin include polyurethane resins, polyolefin resins, vinyl chloride resins, polyamide resins and the like. As the thermoplastic resin material, for example, a material having a load deflection temperature (at 0.45 MPa load) specified in ISO 75 -2 or ASTM-D 648 of 78 °C or higher, a tensile yield strength specified in JIS-K 7113 of 10 MPa or higher, a tensile fracture elongation specified in JIS-K 7113 of 50% or higher, and a Vicat softening temperature (Method A) specified in JIS-K 7206 of 130 °C or higher can be used.

The bead section 60 is continuous with the tire side section 30 and positioned on an inner side in the tire radial direction RD with respect to the tire side section 30. The bead section 60 is annular in a tire circumferential direction.

A part of the bead section 60 is made of a resin material. In the present embodiment, a part of the bead section 60 is formed of the same resin material as that used for the belt layer 50.

The bead section 60 is engaged with a flange part 91 (see FIGS. 1 and 2) formed at an outer end in radial direction of a rim wheel 90.

An inner liner (not illustrated) for preventing air (or a gas such as nitrogen) filled in an internal space of the pneumatic tire 10 assembled to the rim wheel 90 from leaking is attached on a tire inner surface of the pneumatic tire 10.

### (2)Schematic configuration of the bead section

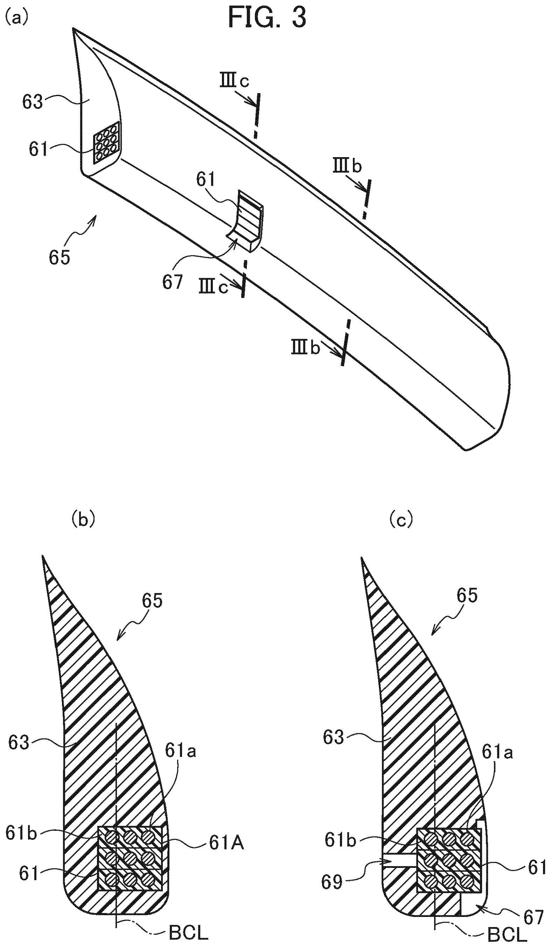

FIG. 2 is a partially enlarged cross-sectional view of the pneumatic tire 10. Specifically, FIG. 2 is a partially enlarged cross-sectional view of the pneumatic tire 10 including the bead section 60 along the tire widthwise direction WD and the tire radial direction RD. FIG. 3(a) is a partial perspective cross-sectional view of a bead member 65 included in the bead section 60. Specifically, FIG. 3(a) illustrates a part of the bead member 65 in an annular structure included in the bead section 60, and illustrates only the bead member 65, which is extracted from the pneumatic tire 10. FIG. 3(a) illustrates the bead member 65, a cross-section perpendicular to a circumferential direction of the bead member 65, a surface on an inner side in the tire radial direction RD, and a surface on an inner side of the tire when the bead member 65 is molded the tire. FIG. 3(b) is a cross-sectional view taken along line IIIb-IIIb in FIG. 3(a). Specifically, FIG. 3(b) is a cross-sectional view of the bead member 65 at a circumferential position where a bead core 61 is covered with a bead filler 63. FIG. 3(c) is a cross-sectional view taken along the line IIIc-IIIc in FIG. 3(a). Specifically, FIG. 3(c) is a cross-sectional view of the bead member 65 at a circumferential position where the bead core 61 is exposed without being covered with the bead filler 63.

As illustrated in FIGS. 2 and 3(a) to 3(c), the bead section 60 of the pneumatic tire 10 includes bead member 65 formed by integrally molding the bead core 61 and the bead filler 63 and having an annular shape extending in the tire circumferential direction.

The bead member 65 (excluding a bead cord 61a to be described later) is made with the same resin material as that used for the belt layer 50.

However, the bead member 65 (bead core 61 and bead filler 63) may not necessarily be formed of the same resin material as that used for the belt layer 50. That is, as long as the above-described resin material that may be used for the belt layer 50 is employed, a resin material utilized for the belt layer 50 and that utilized for the bead member 65 (the bead core 61 and the bead filler 63) may be different.

As illustrated in FIG. 2, the carcass ply 40 is provided along the bead member 65 at an inner side in the tire widthwise direction WD of the bead member 65.

In this embodiment, the carcass ply 40 is folded around the bead member 65 from the inner side to an outer side in the tire widthwise direction WD. That is, the carcass ply 40 has a folded part 45 positioned outside in the tire widthwise direction WD of the bead member 65 and provided along the bead member 65.

### (3) Detailed configuration of bead member

As illustrated in FIGS. 2, 3(b), and 3(c), the bead core 61 has the bead cord 61a formed of a metal material (for example, steel) and a coating resin 61b coating an outer circumference of the bead cord 61a. That is, the bead core 61 is formed of a coated cord 61A in which the bead cord 61a illustrated in FIGS. 3(b) and 3(c) is coated with a resin material.

In the present embodiment, the bead cord 61a is provided in a configuration of 3 × 3 (cords in tire radial direction RD × cords in tire widthwise direction WD) in the cross section of the pneumatic tire 10 along the tire widthwise direction WD and the tire radial direction RD. At this time, the cross-sectional shape of the bead core 61 coated with the coating resin 61a and provided so as to have a configuration of 3 × 3 (cords in tire radial direction RD × cords in tire widthwise direction WD) is a quadrangular shape, specifically a square shape.

As illustrated in FIGS. 2, 3(b), and3 (c), the bead filler 63 is formed to cover the bead core 61. That is, in the bead member 65, the bead core 61 and the bead filler 63 are integrally molded.

Specifically, as illustrated in FIG. 3(b), in the bead member 65, the bead filler 63 made with a resin material is integrally molded so as to cover the bead core 61 and have a smooth outer surface (excluding a portion exposed to a recessed part 67 to be described later), and extends outward in the tire radial direction RD. As illustrated in FIG. 2, the bead filler 63 has a tapered shape in which a width in the tire widthwise direction WD decreases toward an outer side of the tire radial direction RD in the cross section along the tire radial direction RD and the tire widthwise direction WD of the pneumatic tire 10.

The bead member 65 is arranged such that a center position of the bead core 61 (a center of gravity in the square cross section of the bead core 61) is arranged by being shifted with respect to a width-directional center BCL of the bead member 65 in the cross section along the tire widthwise direction WD and the tire radial direction RD. In this embodiment, as illustrated in FIG. 3(b), the center position of the bead core 61 is arranged by being shifted with the width-directional center BCL of the bead member 65 to the inner side in the tire widthwise direction WD. The width-directional center BCL of the bead member 65 is a center in the widthwise direction of the bead member 65 at the center position of the bead core 61.

The bead member 65 made with the resin material in which the bead core 61 and the bead filler 63 are integrally molded is integrally molded by holding the bead core 65 by jigs 85, 87 in a mold for molding the bead member 65. For this reason, as illustrated in FIG. 3(c), at the circumferential position of the bead member 65 where the jigs 85, 87 are disposed during molding, a recessed part 67 is formed, and the bead core 61 is exposed on a surface of the bead member 65. In the bead member 65 of this embodiment, the center position of the bead core 61 is arranged by being shifted with respect to the width-directional center BCL of the bead member 65 to a side of the recessed part 67 formed by a main jig 85.

In order to prevent a boundary between the bead filler 63 and the bead core 61 from being exposed on the surface of the bead member 65, a distance between the surface of the bead member 65 and the bead core 61 is at least 0.1 mm or more. The distance between the surface of the bead member 65 and the bead core 61 may be 0.3 mm or more from the viewpoint of reducing a difference in rigidity between the bead filler 63 and the bead core 61 within the surface of the bead member 65. Here, the distance between the surface of the bead member 65 and the bead core 61 represents a distance from the outer surface of the bead member 65 to a surface of the bead cord 61a closest to the outer surface of the bead member 65.

### (4)Manufacturing method of pneumatic tire

An example of the manufacturing method of the pneumatic tire 10 according to present embodiment will be described.

Embodiments in which a thermoplastic resin material is utilized as the resin material will be described below. The resin materials used for the elements described below may be different from each other as long as the above-described resin materials that may be used for the belt layer 50 is utilized.

First, a manufacturing method of the bead core 61 included in the bead member 65 utilized for the pneumatic tire 10 of the present embodiment will be described.

The coated cord 61A illustrated in FIGS. 3(a) to 3(c) is formed by coating the bead cord 61a with the resin material 61b. In this embodiment, three bead cords 61a made of steel and arranged at equal intervals are coated with a thermoplastic resin to form a coated cord 61A. In the coated cord 61A, the outer circumference side of the bead cord 61a is entirely coated with the coating resin 61b. The bead cord 61a is made of, for example, a metal monofilament or a metal stranded wire.

In order to form such a coating resin 61b on the bead cord 61a, for example, a molten thermoplastic resin material is coated onto the outer circumference of the bead cord 61a, and the resin material is solidified by cooling to form the coated cord 61A. An extruder may be used for coating the bead cord 61a. In this embodiment, as illustrated in FIGS. 3(b) and 3(c), an outer shape of the coating resin 61b when coming out of the extruder is quadrangular, specifically rectangular. However, the outer shape of the coating resin 61b before the coated cords 61A are fused to each other may be a round shape, a triangular shape, another quadrangular shape (such as a square or a diamond shape), or a chamfered shape in accordance with a shape of the bead core 61 to be formed.

Before coating, it is preferable to perform a bonding treatment for bonding the metal and the coating resin. Specifically, a silane-coupling agent is applied very thinly. It is more preferable from the viewpoint of bonding to carry out a degreasing treatment before the bonding treatment.

Next, the resin materials 61b of the coated cords 61A are formed into an annular shape while being fused or bonded to each other, thereby forming the bead core 61 in which a gap between the bead cords 61a is filled with the resin material 61b. In the present embodiment, as illustrated in FIGS. 3(b) and 3(c), the coated cord 61A is wound around a winding jig (not illustrated) three times to form an annular shape, and the coating resin 61b parts adjacent to each other are thermally fused to form the bead core 61. Thereby, the bead core 61 having an annular shape is configured to have a cross-section of 3 × 3 (cords in tire radial direction RD × cords in tire widthwise direction WD) is obtained.

The wound side of the winding jig has the same dimension as an inner circumference of the bead core 61. A number of times of winding may be two or more from the viewpoint of stabilizing a rigidity of the bead core 61. When the number of times of winding is one, it is preferable to form an overlapped part of 10 mm or more between a winding starting tip to a winding end tip in order to secure the fusing strength of the coating resin part thermally fused during injection molding. In the case of heat fusing, the coating resin part may be melted with hot air and re-solidified for fusing, or may be melted by making contact with a trowel heated to a high temperature at its tip part and re-solidified for fusing. The trowel may be abutted while blowing hot air to the coating resin part.

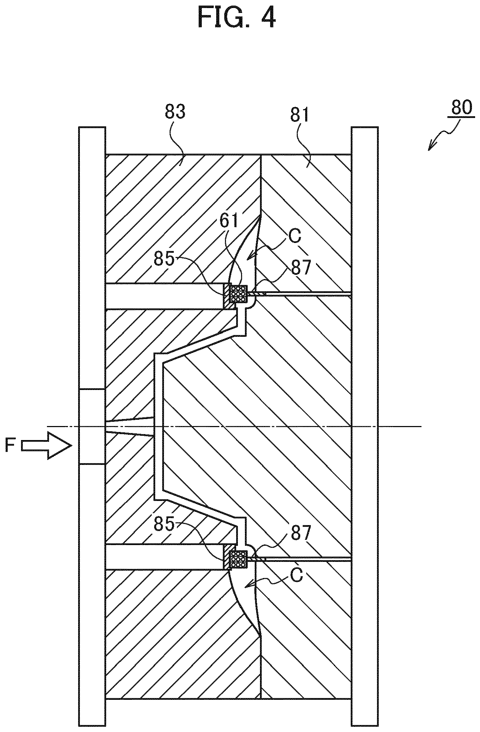

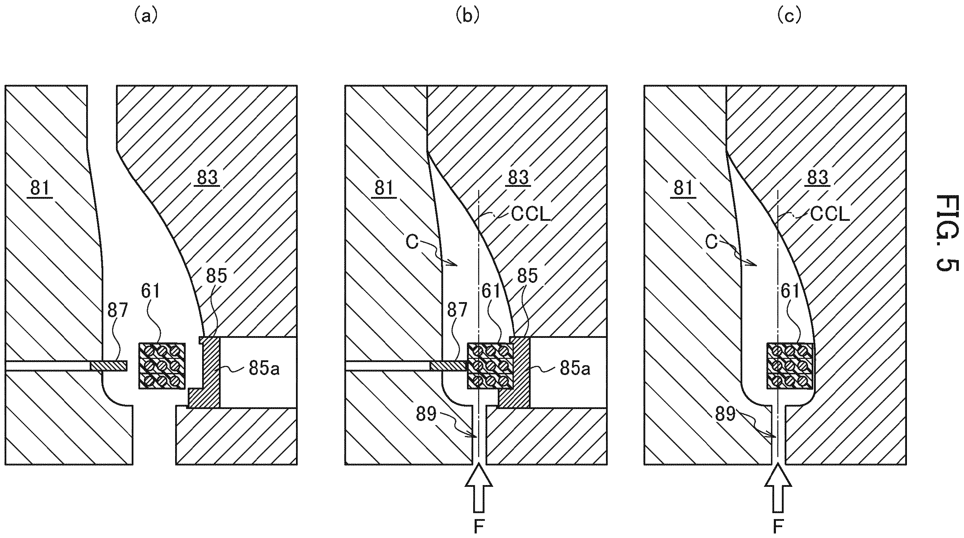

Next, referring to FIGS. 4 and 5(a) to 5(c), a manufacturing method of the bead member 65 used for the pneumatic tire 10 according to the present embodiment will be described.

FIG. 4 is a cross-sectional view of a bead-member mold 80, including a position where a jig 85 configured to hold a bead core 61 is provided, in which a state where the bead core 61 is held in the bead-member mold 80 is illustrated. FIG. 5(a) is an enlarged cross-sectional view illustrating a state before the bead core 61 is held by the jig 85 in the bead-member mold 80. FIG. 5(b) is an enlarged cross-sectional view illustrating a state the bead core 61 is held by the jig 85 in the bead-member mold 80. FIG. 5(c) is an enlarged cross-sectional view illustrating a state the bead core 61 is held by the jig 85 in the bead-member mold 80 at a circumferential position where the jig 85 is not arranged.

The mold 80 for molding the bead member 65 will be described.

In the present embodiment, a mold 80 as illustrated in FIG. 4 is used as the mold 80 for molding the bead member 65. The mold 80 has an outer mold 81 configured to mold an outer surface side of a tire and an inner mold 83 configured to mold an inner surface side of the tire. In a mold 80 for molding the bead member 65, a cavity (space) C in a shape of the bead member 65 is formed between the outer mold 81 and the inner mold 83.

The main jig 85 configured to hold the bead core 61 is provided at a preset position in the cavity C. In the present embodiment, as illustrated in FIGS. 4 and 5(a) to 5(c), the inner mold 83 is provided with a main jig 85 configured to hold the bead core 61. The main jig 85 has a holding portion 85a having substantially L-shape, a shape corresponding to the outer shape of the bead core 61. A circumferential length of the holding portion 85a with respect to the bead core 61 may be formed to be 20 mm or less from the viewpoint of reducing stress concentration in the bead core 61 when stress is applied to the recessed part 67 formed in the bead member 65 at a part where the main jig 85 is removed, or may be 1 mm or more from the viewpoint of securing rigidity of the holding portion 85a.

The main jigs 85 are arranged at equal intervals along an accommodating position of the bead core 61, for example. However, the main jig 85 only needs to reduce displacement of the bead core 61 in the mold 80 caused by the injected resin material. Therefore, the number of main jigs 85 to be arranged may be selected in accordance with actual manufacturing conditions (temperature, pressure, etc., when the molten resin material F is injected), and at least three or more main jigs 85 is arranged in the cavity C at equal intervals in the circumferential direction.

In the present embodiment, as illustrated in FIGS. 4 and 5(a) to 5(c), in order to further reduce displacement of the bead core 61, the outer mold 81 is provided with an auxiliary jig 87 configured so as a position in advancing/retreating direction into the cavity C to be variable.

In the present embodiment, six auxiliary jigs 87 are arranged at positions facing the holding portions 85a of the main jigs 85. However, in a case the displacement of the bead core 61 at the time of injecting the molten resin material F can be sufficiently reduced by holding the bead core 61 by the main jig 85, the auxiliary jig 87 may not be used for holding the bead core 61.

A gate (resin injection path) 89 of the mold 80 illustrated in FIG. 4 is formed so that the molten resin material F passes a tire outer side of the bead core 61 while the bead core 61 is held by the holding portion 85a. The molten resin material F is, for example, a thermoplastic elastomer (TPE) or a thermoplastic resin in a molten state.

In the present embodiment, the gate 89 is a disk gate opened in a ring shape, and the cavity C is formed to communicate with the ring-shaped gate 89 and spread in a hollow disk shape. Although the gate 89 may be a pin gate, a disk gate is preferable from the viewpoint of moldability.

A manufacturing method of the bead member 65 will be described.

In a manufacturing process of the bead member 65, the bead core 61 is held in the mold 80 in a state the bead core 61 abuts with the holding portion 85a of the main jig 85. Specifically, as illustrated in FIG. 5(a), the bead core 61 is held by the holding portion 85a of the main jig 85 provided to the inner mold 83, with the mold 80 opened.

Next, as illustrated in FIG. 5(b), with the mold 80 closed, a tip of the auxiliary jig 85 is brought into contact with the bead core 61 from the opposite side of the main jig 87. Unlike the main jig 85, the auxiliary jig 87 abuts on the bead core 61 in a small area. Thus, the bead core 61 is held in the mold 80 in a state of abutting on the holding portion 85a of the main jig 85 and the tip of the auxiliary jig 87. Since the auxiliary jig 87 abuts on the bead core 61 in a small area, an influence of the recess 69 (see FIG. 3(c)) formed in the bead member 65 after molding by the auxiliary jig 87 in tire manufacturing is small.

Thus, in the manufacturing process of the bead member 65, the bead core 61 is disposed in the mold 80, and a part of the bead core 61 is held and in contact with the holding portion 85a. As a result, the bead core 61 is restricted from moving toward the tire inner direction. Further, as illustrated in FIG. 5(b), the holding portion 85a having substantially L-shape of the present embodiment protrudes slightly and engages with an upper surface of the bead core 61, and accordingly a movement in a vertical direction (the tire radial direction) is also restricted. Further, in the present embodiment, since the bead core 61 is also in contact with the auxiliary jig 87, a movement of the bead core 61 in a tire outer direction is also restricted.

In the manufacturing process of the bead member 65, when it is preferable to restrict the movement of the bead core 61 in the vertical direction more reliably by the holding portion 85a, a cross-section of the holding portion may be formed in a U-shape rather than a substantially L-shape to increase an area where the holding portion abuts on the upper surface of the bead core 61. If an influence of the movement of the bead core 61 in the vertical direction is small, a cross-section of the holding portion may be formed in an L-shape instead of a substantially L-shape so that the holding portion does not abut on the upper surface of the bead core 61.

In the state where the bead core 61 is held by the main jig 85, as illustrated in FIG. 5(b), the bead core 61 is held in the mold 80 so that the center position of the bead core 61 is arranged by being shifted with respect to a width-directional center CCL of the cavity C to the side (the inner mold 83 side) at which the main jig 85 is arranged in the cross-section, the cross-section along the tire width direction and the tire diameter direction and including the main jig 85.

The bead member 65 is molded by injecting the molten resin material F into the cavity C. In the present embodiment, as illustrated in FIG. 5(b), the bead member 65 is molded by injecting the molten resin material F into the mold 80 while the bead core 61 is held at a predetermined position.

In the manufacturing method of the pneumatic tire 10 of the present embodiment, the bead member 65 manufactured by the above method is used instead of an annular bead core and a bead filler in a general pneumatic tire. A green tire is formed by attaching various tire structural members to an outer circumference of a known tire molding drum (not illustrated), and vulcanization-molded similarly to a general pneumatic tire by a vulcanization-molded mold to complete the pneumatic tire 10.

Specifically, first, the inner liner (not illustrated) made of a rubber material, the carcass ply 40 in which the cord is coated with a rubber material, and the belt layer 50 disposed radially outside the carcass ply 40 are stuck to the outer circumference of a known tire molding drum (not illustrated). The bead member 65 having annular shape and manufactured by the above method is arranged on the outside in the tire widthwise direction of the carcass ply 40, the bead member and the carcass ply are bonded by applying an adhesive, and the end of the carcass ply 40 is folded around the bead member 65 from the inside in the tire widthwise direction toward the outside in the tire widthwise direction. Further, an unvulcanized tire case (not illustrated) is formed by attaching a side rubber layer formed into the tire side section 30. Finally, a tread in an unvulcanized state similar to a general pneumatic tire is stuck to the outer circumferential surface of the belt layer 50 to complete the green tire.

The green tire thus manufactured is vulcanization-molded in a vulcanization-molding mold like a general pneumatic tire, and the pneumatic tire 10 is completed.

### (5)Action / Effect

According to the above-described embodiment, the following effects can be obtained. The pneumatic tire 10 includes the bead member 65, around which the carcass ply 40 is folded back, in the bead section 60, the bead member 65 having the bead core 61, in which the resin material 61b covers the bead cords 61a, and the bead filler 63, which is made with the resin material and covering the bead core 61, being integrally molded. In the cross section of the bead member 65 along the tire widthwise direction and the tire radial direction, the center position of the bead core 61 is arranged by being shifted with respect to the width-directional center BCL of the bead member 65.

In the bead member 65 arranged in the bead section 60, the bead core 61 coated with the resin material 61b is covered with the bead filler 63 made with the resin material and integrally molded. Therefore, the bead core 61 is covered with the resin material of the bead filler 63, and the exposed part of the bead core 61 is reduced. According to the configuration, even when a resin harder than the resin utilized in the bead filler is selected as the resin to form the bead core, problems which may be caused by a rigidity difference between the bead core and the rubber around the bead filler can be prevented.

In a case where a displacement of the bead core 61 in the bead member 65 is reduced by holding and contacting the bead core 61 with the main jig 85 while molding the bead member 65, a recessed part 67, in which the bead core 61 is exposed, is formed on the bead member 65 after being molded at a part where the main jig 85 held the bead core 61. However, in the present embodiment, the center position of the bead core 61 is arranged by being shifted with respect to the width-directional center BCL of the bead member 65, and a depth of the recessed part 67 is formed shallow. Therefore, a large amount of the adhesive does not flow into the recessed part 67, and the drying time of the adhesive can be shortened. In other words, productivity can be improved.

That is, according to the pneumatic tire 10 according to the present embodiment, the exposures of the bead core 61 or the recessed parts of the bead core 61 may be reduced while utilizing the bead member 65 in which the bead core 61 having the bead cord 61a coated with the resin material 61b and the bead filler 63 made with the resin material covering the bead core 61 are integrally molded.

Further, the center position of the bead core 61 is arranged by being shifted to an inner side in the tire widthwise direction with respect to the width-directional center BCL of the bead member 65 in the widthwise direction to the inside of the tire widthwise direction WD. According to this configuration, since the center position of the bead core 61 is arranged on an inner side in the tire widthwise direction WD with respect to the width-directional center BCL of the bead member 65, the bead member with a shallow recessed part can be easily manufactured to such an extent that a drying time of the adhesive flowing into the recessed part 67 is not prolonged, while adapting to the shape of the bead member 65, the configuration of the mold, and the manufacturing process.

In the manufacturing method of the tire 10 according to the present embodiment, the bead core 61 is held in the mold 80 so that the center position of the bead core 61 is arranged by being shifted with respect to the width-directional center CCL of the cavity to the side at which the main jig 85 is arranged, in the cross section, including the main jig 85, along the tire widthwise direction WD and the tire radial direction RD, while the bead core 61 is held by the main jig 85.

In the manufacturing method of the tire 10 according to the present embodiment, the bead core 61 is held and in contact with the main jig 85, while molding the bead member 65. The main jig 85 holds the bead core 61 in the mold 80 so that the center position of the bead core 61 is arranged by being shifted with respect to the width-directional center CCL of the cavity C to the side (the inner mold 83 side in this embodiment) where the main jig 85 is arranged.

According to this configuration, since the bead core 61 and the main jig 85 abut on each other and the main jig 85 holds the bead core 61, displacement of the bead core 61 in the bead member 65 can be effectively reduced. Further, according to the arrangement of the main jig 85 in the molding of the present embodiment, the depth of the recessed part 67 formed in the molded bead member 65 is formed to be shallow. Therefore, a large amount of the adhesive does not flow into the recessed part 67, and the drying time of the adhesive in tire manufacturing can be shortened, and productivity can be improved.

Further, as illustrated in FIG. 5(c), in the manufacturing method of the tire 10 according to the present embodiment, the bead core 61 is held in the mold 80 without being in contact with the outer mold 81 and the inner mold 83 at a circumferential position of the mold 80 other than the circumferential position where the main jig 85 is arranged, while molding the bead member 65. Therefore, the exposed part of the bead core 61 is reduced in the molded bead member 65. In other words, even when a resin having a material harder than the bead filler is selected as the resin to be utilized to the bead core 61, the bead member 65 can be molded so as to prevent problems, which may be caused by a rigidity difference between the bead core and the rubber around the bead filler.

Note that three or more of the jigs 85 may be disposed in the cavity C of the mold 80 at equal intervals in the circumferential direction.

According to this configuration, the positional accuracy of the bead core 61 in the bead member 65 can be further improved.

### (6)Other Embodiments

Although the contents of the present invention have been described above in accordance with one or more embodiments, the present invention is not limited to these descriptions, and it is obvious to those skilled in the art that various modifications and improvements can be made.

For example, in the above-described embodiment, the center position of the bead core 61 is arranged by being shifted to the inner side in the tire widthwise direction WD with respect to the width-directional center BCL of the bead member 65. However, the arrangement of the bead core 61 in the bead member 65 may be changed as follows.

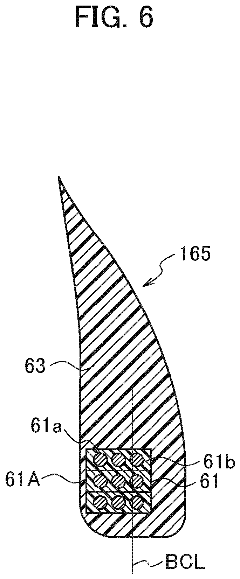

FIG. 6 is an enlarged sectional view of a bead member 165 according to a variation.

More specifically, as illustrated in FIG. 6, a center position of a bead core 61 in the bead member 165 may be arranged by being shifted to an outer side of a tire widthwise direction WD with respect to a width-directional center BCL in a widthwise direction of the bead member 165. However, even in the variation of FIG. 5, the center position of the bead core 61 and the width-directional center BCL in the widthwise direction of the bead member 165 are defined in the same manner as in the embodiment illustrated in FIG. 3(b).

According to this configuration, since the center position of the bead core 61 is arranged on the outer side in the tire widthwise direction WD with respect to the width-directional center BCL of the bead member 65, the bead member with a shallow recessed part can be easily manufactured to such an extent that a drying time of the adhesive flowing into the recessed part 67 is not prolonged, while adapting to the shape of the bead member 65, the configuration of the mold, and the manufacturing process.

In the above-described embodiment, the bead member 65 is molded in a configuration the bead core 61 being held with the main jig 85 provided in the inner mold 83 and the auxiliary jig 87 provided in the outer mold 81. On the contrary, with regard to the manufacturing method of the bead member 165, the bead member 165 may be molded with the main jig 85 provided in the outer mold 81 and the auxiliary jig 87 provided in the inner mold 83, and the recessed part 67 formed by the main jig 85 can be made to be shallow as in the case of molding the bead member 65.

Although embodiments of the present invention have been described as described above, it should not be understood that the statements and drawings that form part of this disclosure limit the invention. Various alternative embodiments, examples and operational techniques will be apparent to those skilled in the art from this disclosure.

The entire contents of Japanese Patent Application No. 2019 -113619 (filing date: June 19, 2019) are incorporated herein by reference.

### Reference Signs List

- 10: PNEUMATIC TIRE
- 20: TREAD SECTION
- 30: TIRE SIDE SECTION
- 40: CARCASS PLY
- 60: BEAD SECTION
- 61: BEAD CORE
- 61a: BEAD CORD
- 61b: COATING RESIN
- 61A: COATED CORD
- 63: BEAD FILLER
- 65,165: BEAD MEMBER
- 80: MOLD
- 85: MAIN JIG
- BCL: WIDTH-DIRECTIONAL CENTER OF BEAD MEMBER
- C: CAVITY
- CCL: WIDTH-DIRECTIONAL CENTER OF CAVITY
- F: MOLTEN RESIN MATERIAL
- RD: TIRE RADIAL DIRECTION
- WD: TIRE WIDTHWISE DIRECTION

## Claims

1. A tire comprising:
a tread section configured to be in contact with a road surface;
a tire side section being continuous with the tread section and positioned on an inner side in a tire radial direction with respect to the tread section; and
a bead section being continuous with the tire side section and positioned on an inner side in the tire radial direction with respect to the tire side section, wherein
a carcass ply as a skeleton of the tire, which is folded outward in a tire widthwise direction via the bead section, is provided in the tire,
the bead section includes a bead member formed by integrally molding a bead core, in which a resin material covers bead cords, and a bead filler made with a resin material covering the bead core, and
in a cross-section along the tire widthwise direction and the tire radial direction, a center position of the bead core is arranged by being shifted with respect to a width-directional center of the bead member.

2. The tire according to claim 1, wherein the center position of the bead core is arranged by being shifted to an inner side in the tire widthwise direction with respect to the width-directional center of the bead member.

3. The tire according to claim 1, wherein the center position of the bead core is arranged by being shifted to an outer side in the tire widthwise direction with respect to the width-directional center of the bead member.

4. A tire manufacturing method comprising:
a step of forming a coated cord formed by coating a bead cord with a resin material;
a step of forming a bead core in which a gap between the bead cords is filled with a resin material by forming the bead core in an annular shape while fusing or bonding the resin materials of the coated cords to each other;
a step of holding the bead core in a mold by abutting the bead core with a jig provided in a cavity of the mold, the mold configured to mold a bead member to be included in a bead section of the tire; and
a step of molding the bead member by injecting molten resin material into the cavity, wherein
in the step of holding the bead core, the bead core is held in the mold so that a center position of the bead core is arrange by being shifted with respect to a width-directional center of the cavity to a side at which the jig is arranged, in a cross-section along a tire widthwise direction and a tire radial direction.

5. The tire manufacturing method according to claim 4, wherein three or more of the jigs are disposed in the cavity of the mold at equal intervals in a circumferential direction.
